# EUROPEAN PATENT SPECIFICATION

(11) **EP 4 040 274 B1**
(45) Date of publication and mention of the grant of the patent: **25.02.2026**
(21) Application number: 20893453.9
(22) Date of filing: 16.11.2020
(51) Int. Cl.: G06F 3/041

(54) **ELECTRONIC DEVICE AND METHOD FOR CONTROLLING DISPLAY SCREEN THEREOF**
ELEKTRONISCHE VORRICHTUNG UND VERFAHREN ZUM STEUERN EINES ANZEIGEBILDSCHIRMS DAVON
DISPOSITIF ÉLECTRONIQUE ET PROCÉDÉ DE COMMANDE D'ÉCRAN D'AFFICHAGE ASSOCIÉ

(30) Priority: 26.11.2019 CN 201911175780
(43) Date of publication of application: 10.08.2022
(73) Proprietor: Huawei Technologies Co., Ltd., Longgang District Shenzhen, Guangdong 518129 (CN)
(72) Inventor: LI, Jingwei, Shenzhen, Guangdong 518129 (CN); CUI, Chuang, Shenzhen, Guangdong 518129 (CN)
(74) Representative: Gill Jennings & Every LLP
(86) International application number: PCT/CN2020/129042
(87) International publication number: WO 2021/104078

(56) References cited:
- WO-A1-2019/149044
- CN-A- 103 927 857
- CN-A- 103 945 026
- CN-A- 105 072 470
- CN-A- 105 827 801
- CN-A- 110 989 860
- US-A1- 2006 060 762
- US-A1- 2015 042 789
- US-A1- 2018 165 437
- US-B1- 10 340 968

## Description

This application claims priority to Chinese Patent Application No. 201911175780.2, filed on November 26, 2019 and entitled "ELECTRONIC DEVICE AND DISPLAY CONTROL METHOD FOR ELECTRONIC DEVICE".

### TECHNICAL FIELD

This application relates to the field of electronic technologies, and in particular, to an electronic device and a display control method for the electronic device.

### BACKGROUND

With rapid development of science and technology, an increasing quantity of users choose to use touchscreen mobile terminals. To prevent an event that a user touches a display of a mobile terminal during a call, from causing a misoperation, a manner is usually used in which a proximity sensor is built in the mobile terminal, to control the display of the mobile terminal. The proximity sensor is usually an infrared light proximity sensor. For example, when the user makes a call, an infrared light proximity sensor in the mobile terminal is triggered to start working. Based on a detection result reported by the infrared proximity sensor, it can be determined whether the user approaches or leaves the mobile terminal. When the user approaches the mobile terminal, the display of the mobile terminal is turned off; and when the user leaves the mobile terminal, the display of the mobile terminal is lit.

WO 2019/149044 A1 discloses a method of controlling a screen to turn on or off.

US 10 340 968 B1 discloses a mobile terminal and method for controlling the same.

US 2015/0042789 A1 discloses techniques for determining the distance of an object to an electronic device.

US 2006/0060762 A1 discloses a portable electronic device with activation sensor.

### SUMMARY

Embodiments of this application provide an electronic device and a display control method for the electronic device, to improve accuracy of detecting approaching and leaving states of an external object, and effectively control power consumption introduced by ultrasonic proximity detection.

According to a first aspect, an embodiment of this application discloses a display control method applied to an electronic device. The electronic device has an infrared light proximity detection function and an ultrasonic proximity detection function. The method includes: In response to a proximity detection trigger condition, the electronic device performs infrared light proximity detection by using an infrared light proximity sensor, and determines whether a current use status of the electronic device meets a condition for enabling ultrasonic proximity detection; and when the current use status meets the condition for enabling ultrasonic proximity detection, the electronic device enables ultrasonic proximity detection, to detect whether an external object approaches or leaves the electronic device. To be specific, according to the method, in some scenarios, the electronic device may detect, through both infrared light proximity detection and ultrasonic proximity detection, whether an external object approaches or leaves the electronic device, to improve detection accuracy and reduce a quantity of times of incorrectly determining a screen status of the electronic device; and in some other scenarios in which there is a higher requirement for a proximity detection time, whether an external object approaches or leaves the electronic device may be detected through only infrared light proximity detection, thereby saving power to be consumed by ultrasonic proximity detection.

In an implementation of the first aspect, the display control method for an electronic device further includes: The electronic device detects whether the infrared light proximity sensor is normal; and when the infrared light proximity sensor is normal, the electronic device determines, based on an infrared light proximity detection result and an ultrasonic proximity detection result, whether an external object approaches or leaves, or when the infrared light proximity sensor is abnormal, the electronic device determines, based on an ultrasonic proximity detection result, whether an external object approaches or leaves. That is, when the infrared proximity sensor is abnormal, whether an external object approaches or leaves the electronic device is determined based on only the ultrasonic proximity detection result (not based on the infrared light proximity detection result), to implement control of a display status of the electronic device.

In another implementation of the first aspect, that the electronic device determines, based on an infrared light proximity detection result and an ultrasonic proximity detection result, whether an external object approaches or leaves includes:

When at least one of the infrared light proximity detection result and the ultrasonic proximity detection result indicates that an external object approaches the electronic device, the electronic device determines that the external object approaches; and when both the infrared light proximity detection result and the ultrasonic proximity detection result indicate that an external object leaves the electronic device, the electronic device determines that the external object leaves.

In another implementation of the first aspect, the condition for enabling ultrasonic proximity detection includes: The electronic device is in a phone call state, or the electronic device initiates a phone call.

In another implementation of the first aspect, the condition for enabling ultrasonic proximity detection includes: The electronic device is in a phone call state and an earpiece of the electronic device is turned on, or the electronic device initiates a phone call and an earpiece of the electronic device is turned on.

In another implementation of the first aspect, the condition for enabling ultrasonic proximity detection includes: The electronic device is in an instant-messaging-software call state, or the electronic device initiates an instant-messaging-software call.

In another implementation of the first aspect, the condition for enabling ultrasonic proximity detection includes: The electronic device is in an instant-messaging-software call state, and an earpiece or a speaker of the electronic device is turned on.

In another implementation of the first aspect, the condition for enabling ultrasonic proximity detection includes: The electronic device initiates an instant-messaging-software call, and an earpiece or a speaker of the electronic device is turned on.

In another implementation of the first aspect, the condition for enabling ultrasonic proximity detection includes: A current digital signal processor mode of the electronic device is a digital signal processor mode that meets the condition for enabling ultrasonic proximity detection.

In another implementation of the first aspect, the condition for enabling ultrasonic proximity detection includes: A current digital signal processor mode of the electronic device is a first digital signal processor mode that meets the condition for enabling ultrasonic proximity detection, and an earpiece of the electronic device is turned on.

When the current digital signal processor mode of the electronic device is the first digital signal processor mode that meets the condition for enabling ultrasonic proximity detection, ultrasonic proximity detection does not necessarily need to be enabled. For example, when a user makes a call by using a device such as a headset or a speaker, there is no requirement for determining a distance between the electronic device and an external object. Therefore, in this solution, whether the earpiece is turned on is determined while the digital signal processor mode is determined, to save power to be consumed by ultrasonic proximity detection.

In another implementation of the first aspect, the condition for enabling ultrasonic proximity detection includes: A current digital signal processor mode of the electronic device is a second digital signal processor mode that meets the condition for enabling ultrasonic proximity detection, and an earpiece or a speaker of the electronic device is turned on.

When the current digital signal processor mode of the electronic device is the first digital signal processor mode that meets the condition for enabling ultrasonic proximity detection, ultrasonic proximity detection does not necessarily need to be enabled. For example, when a user makes an instant-messaging-software audio or video call by using a device such as a headset or a speaker, there is no requirement for determining a distance between the electronic device and an external object. Therefore, in this solution, whether the earpiece or the speaker is turned on is determined while the digital signal processor mode is determined, to save power to be consumed by ultrasonic proximity detection.

According to a second aspect, an embodiment of this application discloses a machine-readable medium. The machine-readable medium stores instructions, and when the instructions are executed on a machine, the machine is enabled to perform the display control method for an electronic device in the first aspect.

According to a third aspect, an embodiment of this application discloses a terminal, including:
one or more processors;
a memory, configured to store instructions;
an infrared light proximity sensor, configured to detect approaching and leaving of an external object by using infrared light; and
an ultrasonic proximity sensor, configured to detect approaching and leaving of an external object by using an ultrasonic wave, where
when the instructions are executed by the one or more processors, the terminal is enabled to control the infrared light proximity sensor and the ultrasonic proximity sensor to perform the display control method for an electronic device in the first aspect.

In an implementation of the third aspect, the ultrasonic proximity sensor includes an earpiece and a microphone that are of the terminal, the earpiece emits an ultrasonic wave, and the microphone receives an ultrasonic wave reflected by the external object.

According to a fourth aspect, an embodiment of this application provides an electronic device. The electronic device has a function of implementing a behavior of the electronic device in the foregoing display control method for an electronic device. The function may be implemented by hardware, or may be implemented by executing corresponding software by hardware. The hardware or software includes one or more modules corresponding to the foregoing function.

### BRIEF DESCRIPTION OF DRAWINGS

FIG. 1 is a schematic structural diagram of a mobile phone 10 according to some embodiments of this application;
FIG. 2 shows a scenario of detecting whether an external object 20 approaches or leaves a mobile phone 10 according to some embodiments of this application;
FIG. 3 is a schematic diagram of a mobile phone 10 registering for ultrasonic proximity detection and infrared light proximity detection according to some embodiments of this application;
FIG. 4 is a schematic diagram of a mobile phone 10 coupling an ultrasonic proximity detection result and an infrared light proximity detection result according to some embodiments of this application;
FIG. 5 is a schematic flowchart of determining a display status of a mobile phone with reference to infrared light proximity detection and ultrasonic proximity detection according to some embodiments of this application;
FIG. 6 is a schematic flowchart of detecting whether an external object approaches or leaves based on an ultrasonic proximity detection result and an infrared light proximity detection result according to some embodiments of this application; and
FIG. 7 is a structural block diagram of a terminal.

### DESCRIPTION OF EMBODIMENTS

The embodiments of this application include but are not limited to an electronic device, a display control method for the electronic device, a medium, and a system.

It may be understood that as used in this specification, a term "module" may be or include an application-specific integrated circuit (ASIC), an electronic circuit, a memory and/or a processor (shared, dedicated, or a group) that executes one or more software or firmware programs, combined logic circuits, and/or another appropriate hardware component that provides a described function, or may be a part of these hardware components.

The following further describes in detail the embodiments of this application with reference to accompanying drawings.

A display control method for an electronic device provided in this application can be applied to any electronic device with a display, including but not limited to an electronic device such as a mobile phone, a tablet computer, a laptop computer, a desktop computer, a wearable device, a head-mounted display, a mobile email device, a portable game console, a portable music player, a reader device, a personal digital assistant, a virtual reality or augmented reality device, and a television set in which one or more processors are embedded or coupled.

The following describes the technical solutions of this application by using a mobile phone 10 as an example according to some embodiments of this application.

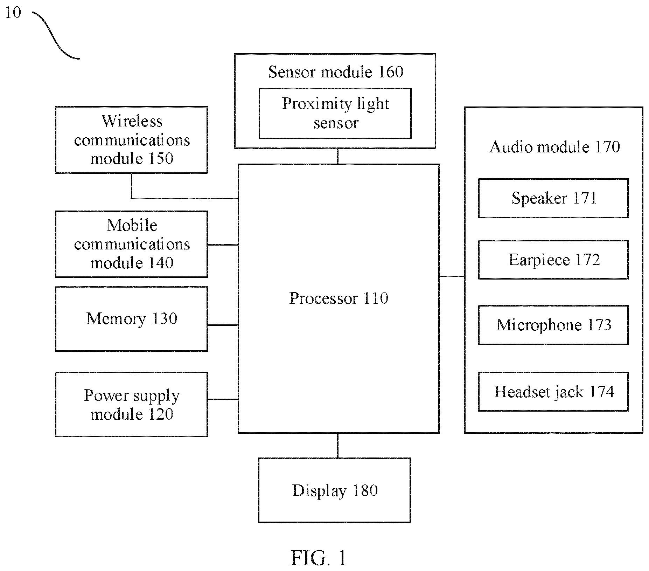

As shown in FIG. 1, the mobile phone 10 may include a processor 110, a power supply 120, a memory 130, a mobile communications module 140, a wireless communications module 150, a sensor module 160, an audio module 170, a display 180, and the like.

It may be understood that a structure illustrated in the embodiments of the present invention does not constitute a specific limitation on the mobile phone 10. In some other embodiments of this application, the mobile phone 10 may include components more or fewer than those shown in the figure, or some components are combined, or some components are split, or the components are disposed differently. The components shown in the figure may be implemented in hardware, software, or a combination of software and hardware.

The processor 110 may include one or more processing units, for example, may include a processing module or processing circuit of a central processing unit CPU (Central Processing Unit), an image processing unit GPU (Graphics Processing Unit), a digital signal processor DSP, a microprocessor MCU (Micro-programmed Control Unit), an AI (Artificial Intelligence, artificial intelligence) processor, a programmable logic device FPGA (Field Programmable Gate Array), or the like. Different processing units may be independent components, or may be integrated in one or more processors. A storage unit may be disposed in the processor 110, and is configured to store instructions and data. In some embodiments, the storage unit in the processor 110 is a cache.

The power supply module 120 may include a power supply, a power management component, and the like. The power management component is configured to manage charging of the power supply and power supplying to another module performed by the power supply.

The mobile communications module 140 may include but is not limited to an antenna, a power amplifier, a filter, and an LNA (Low noise amplify, low noise amplifier). The mobile communications module 140 may provide a wireless communication solution that is applied to the mobile phone 10 and that includes 2G, 3G, 4G, 5G, and the like. The mobile communications module 140 may receive an electromagnetic wave by using the antenna, perform processing such as filtering and amplification on the received electromagnetic wave, and transmit the processed electromagnetic wave to a modem processor for demodulation. The mobile communications module 140 may further amplify a signal modulated by the modem processor, convert the signal into an electromagnetic wave, and radiate the electromagnetic wave by using the antenna. In some embodiments, at least some functional modules of the mobile communications module 140 may be disposed in the processor 110. In some embodiments, at least some functional modules of the mobile communications module 140 may be disposed in a same component with at least some modules of the processor 110. Wireless communications technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT (Bluetooth, Bluetooth), GNSS (Global Navigation Satellite System, global navigation satellite system), WLAN (Wireless Local Area Networks, wireless local area network), NFC (Near Field Communication, near field communication), FM (Frequency Modulation, frequency modulation), IR (Infrared, infrared) technology, and/or the like. The GNSS may include the global positioning system (global positioning system, GPS), the global navigation satellite system (global navigation satellite system, GLONASS), the BeiDou navigation satellite system (beidou navigation satellite system, BDS), the quasi-zenith satellite system (quasi-zenith satellite system, QZSS), and/or the satellite-based augmentation system (satellite based augmentation systems, SBAS).

The wireless communications module 150 may include an antenna, and transmit and receive an electromagnetic wave by using the antenna. The wireless communications module 150 may provide a wireless communication solution that is applied to the mobile phone 10 and that includes wireless local area network (wireless local area networks, WLAN) (for example, a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), infrared (infrared, IR) technology, and the like. The mobile phone 10 may communicate with a network and another device by using the wireless communications technology.

In some embodiments, the mobile communications module 140 and the wireless communications module 150 that are of the mobile phone 10 may be alternatively located in a same module.

The display 180 is configured to display a man-machine interaction interface, an image, a video, and the like. The display 180 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), and the like.

The sensor module 160 may include an infrared light proximity sensor, which is configured to detect, by emitting and receiving infrared light, whether an external object approaches or leaves the mobile phone 10. In some embodiments, the sensor module 160 may further include at least one ultrasonic proximity sensor, which is configured to detect a distance between an external object and the mobile phone 10 by emitting and receiving ultrasonic waves, and further determine whether the external object approaches or leaves the mobile phone 10. Certainly, specific working principles of the infrared light proximity sensor and the ultrasonic proximity sensor are not limited in the embodiments of this application, and any sensor that detects, by using infrared light or an ultrasonic wave, whether an external object approaches or leaves may be used to implement this embodiment of this application. In some embodiments, the sensor module may further include an accelerometer, a gyroscope, an ambient light sensor, a fingerprint sensor, and the like.

The audio module 170 is configured to convert digital audio information into an analog audio signal for output, or convert an analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

As shown in FIG. 1, the audio module 170 may include a speaker 171, an earpiece 172, a microphone 173, and a headset jack 174. The speaker 171 is configured to convert an audio signal into a sound signal, and then output the sound signal. A user of the mobile phone 10 may listen to music or answer a hands-free call by using the speaker 170A. The earpiece 172, also referred to as a "receiver", is configured to convert an audio electrical signal into a sound signal, and then output the sound signal. When the user of the mobile phone 10 answers a call, makes a network voice call, or outputs voice information, the user may listen to speech by moving the earpiece 172 to an ear of the user. The earpiece 172 can emit an ultrasonic wave. The microphone 173 is configured to convert a collected sound signal into an electrical signal. In some embodiments, the microphone 173 may include a primary microphone and a secondary microphone, where the primary microphone is disposed at the bottom of the mobile phone 10, and the secondary microphone is disposed at the top of the mobile phone 10. In some embodiments, the earpiece 172 and the secondary microphone can implement a function of the ultrasonic proximity sensor. To be specific, an ultrasonic wave emitted by the earpiece 172 can be collected by the secondary microphone after being reflected by an external object, so that whether the external object approaches or leaves the mobile phone 10 can be determined. The headset jack 174 is configured to connect to a wired headset.

The following describes in detail a process of controlling the display of the mobile phone 10.

In some embodiments of this application, a display control method for the mobile phone 10 is disclosed. In the method, the mobile phone 10 determines, based on different scenarios, whether to enable an ultrasonic proximity detection function. The mobile phone 10 implements the function of the ultrasonic proximity sensor by using the earpiece 172 and the secondary microphone of the microphone 173, that is, emits an ultrasonic wave by using the earpiece 172, and receives, by using the secondary microphone of the microphone 173, an ultrasonic wave reflected by an external object.

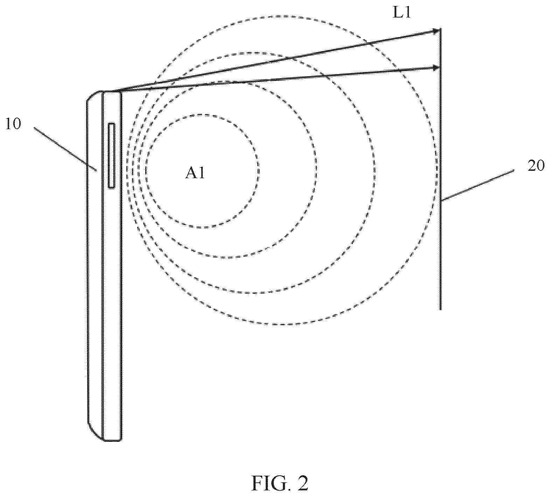

Specifically, for example, in some scenarios, when the mobile phone 10 approaches an external object or an external object approaches the mobile phone 10, whether the external object leaves or approaching the mobile phone 10 (as shown in FIG. 2) may be determined based on both an infrared light proximity detection result reported by the infrared light proximity sensor and an ultrasonic proximity detection result reported by the audio module 170. In some other scenarios, to save power to be consumed when ultrasonic proximity detection is enabled, an external object is detected based on only an infrared light proximity detection result reported by the infrared light proximity sensor. Finally, a status of the display 180 is controlled based on a determined result.

For another example, when the mobile phone 10 uses an automatic brightness adjustment application of the display 180, the display 180 of the mobile phone 10 may register for infrared proximity detection as soon as the display 180 is lit, to obtain an infrared light proximity detection result, so that it is avoided that the display 180 is falsely dimmed when an external object blocks the display 180 of the mobile phone 10. In this application scenario, if ultrasonic proximity detection is also enabled, higher power consumption is caused. Therefore, whether an external object approaches may be detected based on only an infrared light proximity detection result reported by the infrared light proximity sensor.

As shown in FIG. 2 again, when the user of the mobile phone 10 answers or makes a call by using the earpiece, to prevent the external object 20 from accidentally triggering a function key on the display 180 of the mobile phone 10, the external object may be detected based on both the infrared light proximity detection result reported by the infrared light proximity sensor and the ultrasonic proximity detection result reported by the audio module 170, to improve accuracy of detecting whether the external object 20 approaches or leaves.

Specifically, in some embodiments, the infrared light proximity sensor may detect approaching and leaving of the external object 20 relative to the mobile phone 10 in the following manner:

The infrared light proximity sensor emits infrared light L1 when performing detection, and determines, based on an intensity of infrared light reflected by the external object 20, whether the external object 20 approaches or leaves the mobile phone 10. For example, when the intensity of the infrared light is greater than a preset threshold, the infrared light proximity sensor determines that the object approaches; and when the intensity of the infrared light is less than another preset threshold, the infrared light proximity sensor determines that the object leaves.

In addition, in some embodiments, the audio module 170 may detect approaching and leaving of the external object 20 relative to the mobile phone 10 in the following manner:

During measurement, the earpiece 172 emits an ultrasonic wave A1; and the secondary microphone of the microphone 173 receives an ultrasonic wave that is within a predefined frequency band range (for example, 24 kHz to 36 kHz, and 38 kHz) and that is reflected by the external object 20, determines a distance between the mobile phone 10 and the external object 20 based on the received ultrasonic wave, and then determines, based on the determined distance between the mobile phone 10 and the external object 20, whether the external object 20 approaches or leaves the mobile phone 10.

After combining the detection results reported by the infrared light proximity sensor and the audio module 170, the mobile phone 10 may finally determine whether the external object 20 approaches or leaves the mobile phone 10, and then control the display 180 of the mobile phone 10 to enter a light-off state or a light-on state.

Still referring to FIG. 2, the infrared light proximity sensor detects the external object 20 by emitting the infrared light L1. This detection manner has a comparatively high requirement for a disposing position of the infrared light proximity sensor. To maximize the screen, the infrared light proximity sensor may be disposed at the top of the mobile phone 10. That is, a light-emitting surface of the infrared light proximity sensor is not on a plane on which the screen is, but on a top plane that is perpendicular to the screen. When the light-emitting surface of the sensor is disposed at the top of the mobile phone 10, an included angle between light emitted or received by the sensor and the screen is greater than 90°. Therefore, when the infrared light proximity sensor is used for proximity detection, incorrect determining easily occurs. For example, when the user holds the mobile phone 10 close to an ear, due to the disposing position of the sensor, approaching of a face may not be detected, resulting in incorrect determining. To this end, to improve detection accuracy, the ultrasonic proximity detection function is added in this application. As shown in FIG. 2, the ultrasonic wave A1 propagates forward along a spherical surface. Compared with the infrared light proximity sensor, the earpiece 172 covers a larger detection area and has a lower requirement for a disposing position. Therefore, the ultrasonic detection result is combined with the infrared light proximity detection result reported by the infrared light proximity sensor to determine the distance between the external object 20 and the mobile phone 10. This can effectively reduce a quantity of times of incorrect determining caused by an inaccurate detection result reported by the infrared light proximity sensor, and therefore reduces a quantity of times the status of the display 180 is incorrectly controlled due to incorrect status information reported by the infrared light proximity sensor. For example, when the display 180 is supposed to be turned off, the display 180 is in a light-on state instead, resulting in accidental triggering.

Enabling ultrasonic proximity detection introduces a power consumption problem. Therefore, to reduce power consumption of the mobile phone 10, as described above, use scenarios of the mobile phone 10 may be classified based on a specific case, so that in some use scenarios, both ultrasonic proximity detection and infrared light proximity detection are enabled, whereas in some use scenarios, ultrasonic proximity detection is not enabled, and only infrared light proximity detection of the infrared light proximity sensor is enabled. For example, the mobile phone 10 may be set as follows: When the user of the mobile phone 10 makes or answers a call, or makes a voice call or has a video chat by using instant messaging software (for example, the instant messaging software may be WeChat or QQ), both ultrasonic proximity detection and infrared light proximity detection are enabled; and for applications such as an automatic display brightness adjustment application or an AOD (Always on Display, always on display function) application, the ultrasonic proximity detection function is not enabled, and only the infrared light proximity sensor is used for detection.

It may be understood that the use scenarios may be classified based on a specific case, and a classification manner is not limited to a classification manner mentioned in this application.

In a case in which both ultrasonic proximity detection and infrared light proximity detection need to be enabled, detection results obtained through the two types of detection need to be coupled to determine the status of the display 180. For example, in some embodiments, as shown in Table 1 below, when information about the infrared light proximity detection result reported by the infrared light proximity sensor is normal, if one of the infrared light proximity detection result and the ultrasonic proximity detection result indicates that the external object 20 is in an approaching state relative to the mobile phone 10, for example, the infrared light proximity detection result or the ultrasonic proximity detection result indicates that the external object 20 (for example, an ear or a face) approaches the mobile phone 10, it is determined that the external object 20 is in the approaching state relative to the mobile phone 10. In this case, the display 180 is controlled to be in a state corresponding to the approaching state, for example, in a light-off state, and function keys on the display 180 are in a locked state. Only when both the infrared light proximity detection result and the ultrasonic proximity detection result indicate that the obstacle 20 is in a leaving state relative to the mobile phone 10, it is determined that the external object 20 is in the leaving state relative to the mobile phone 10. In this case, the display 180 is controlled to be in a state corresponding to the leaving state. For example, the display 180 is lit, so that the function keys on the display 180 are in a trigger-able state.

**Table 1**

| Ultrasonic proximity detection result | Infrared light proximity detection result | Post-coupling result |
|---|---|---|
| Approaching state | Approaching state | Approaching state |
| | Leaving state | Approaching state |
| Leaving state | Approaching state | Approaching state |
| | Leaving state | Leaving state |

It may be understood that in another embodiment of this application, a distance between an external object and a mobile phone may be alternatively determined in another coupling manner. This is not limited herein.

It may be understood that in the embodiments of this application, the approaching state indicates that the distance between the external object and the mobile phone is less than an approaching distance threshold, and in this case, a display needs to be controlled to enter or remain in a state corresponding to the approaching state, for example, to enable the display to enter or be in a light-off state, and enable function keys on the display to be in a locked state, or to enable the display to enter AOD (Always on Display, always on display function); and the leaving state indicates that the distance between the external object and the mobile phone is greater than a leaving distance threshold, and in this case, the display needs to be controlled to enter or remain in a state corresponding to the leaving state, for example, to enable the display to enter or be in a light-on state, and enable the function keys on the display to be in a trigger-able state, or to enable the display to end AOD.

In addition, it may be understood that in some embodiments of this application, after infrared light proximity detection and ultrasonic proximity detection are completed, when the display of the mobile phone is in the light-off state, the display is lit if it is detected that a physical key of the mobile phone is triggered.

The following describes, by using the mobile phone 10 using an Android system as an example, in detail an implementation method for controlling the status of the display 180. It may be understood that the following description is merely for illustrative purposes, and does not constitute a limitation on the display control method in this application. For a mobile phone or another electronic device that uses another operating system, the display 180 control method in this application is still applicable.

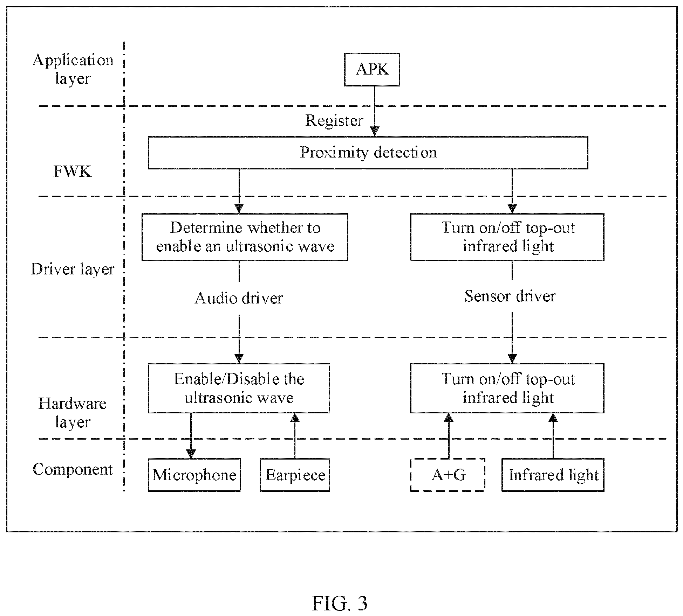

First, to implement that the mobile phone 10 invokes ultrasonic proximity detection of the audio module 170, in some embodiments, proximity detection registration information of an application may be transferred to an audio driver layer when the application registers for proximity detection. As shown in FIG. 3, a process of transferring proximity detection registration information to the audio driver layer includes: When meeting a preset condition, an APK (Android Package, Android package) registers for proximity detection; and after receiving a proximity detection registration request from the APK, an FWK (framework, framework) transfers proximity detection registration information to both the infrared light proximity sensor (for example, located at the top of the mobile phone 100, and emitting top-out infrared light) and the audio driver layer by using logic judgment code in a sensor service (Sensor Service) in the FWK. It should be noted that one or more applications in the mobile phone may use proximity data. When a trigger condition for these applications to use the proximity data is met, these applications register for proximity detection, that is, these applications request to use the proximity data.

It may be understood that an approaching or leaving function of the mobile phone 10 or the electronic device that uses another operating system may be alternatively connected to the ultrasonic proximity detection function of the components in the audio module 170 in another manner, or be connected to another component providing the ultrasonic proximity detection function in the electronic device, for example, be connected to an ultrasonic sensor. This is not limited herein.

In addition, it may be understood that in some embodiments, another determining result may be alternatively added for determining the approaching or leaving state of the external object relative to the mobile phone. For example, a posture determining function may be added. When proximity detection information is registered, the registered proximity detection information is transferred, by using the sensor service (sensor service) function in the FWK, to a gyroscope and an accelerometer (A+G) that are in the sensor module, so that after a proximity detection enabling instruction is received, the user's posture of using the mobile phone is determined, and proximity detection result information is generated with reference to a posture determining result and a proximity detection determining result.

In addition, after the proximity detection registration information is transferred to the audio driver layer, judgment logic needs to be added to the audio driver layer, so that ultrasonic proximity detection is enabled in response to the proximity detection enabling instruction only in some use scenarios, thereby saving power to be consumed when ultrasonic proximity detection is enabled for a long time or ultrasonic proximity detection is frequently enabled and disabled. For example, the judgment logic may determine, by using DSP_MODE, whether ultrasonic proximity detection needs to be enabled. In some embodiments, a definition of DSP_MODE is shown in Table 2 below.

**Table 2**

| DSP_MODE | Description | Typical scenario |
|---|---|---|
| MODE 0 | Normal mode | Watching a video, listening to music, playing a game, and the like |
| MODE 1 | Ringing | Incoming call ringing |
| MODE 2 | Calling | In a phone call state or initiating a phone call |
| MODE 3 | Instant messaging software | Voice call or video chat by using instant messaging software (for example, WeChat, QQ, network calling (VOIP), Skype, or Face time) |
| Others | Others | Automatic brightness adjustment, AOD (Always on Display, always on display function), and the like |

Based on the foregoing definition of DSP_MODE, the audio driver layer determines whether DSP_MODE is MODE 2 or MODE 3 after receiving a proximity detection request (that is, the proximity detection enabling instruction) for the external object. When a determining result is yes, the audio driver layer enables an ultrasonic emission function of the earpiece 172. Simultaneously, after receiving the proximity detection enabling instruction, the infrared light proximity sensor emits infrared light, to measure the external object. When the determining result is that DSP_MODE is not MODE 2 or MODE 3, the ultrasonic emission function of the earpiece 172 is not enabled. In this case, only the infrared light proximity sensor emits infrared light, to measure the distance between the external object and the mobile phone 10.

However, as described above, ultrasonic proximity detection does not necessarily need to be enabled when the mobile phone 10 is in MODE 2 or MODE 3. This is because when the user of the mobile phone 10 makes a call by using a device such as a wired headset, a Bluetooth headset, a speaker, or a speaker, there is no requirement for determining the distance between the external object and the mobile phone 10. In this case, enabling ultrasonic proximity detection introduces a power consumption problem. To this end, in some embodiments, on a basis of the foregoing scenario determining that is performed based on DSP_MODE, whether to enable ultrasonic proximity detection is determined with reference to a use status of an audio device. Specifically, as shown in Table 3 below, when DSP_MODE = MODE 2, and the earpiece is turned on, the ultrasonic proximity detection function is enabled; or when DSP_MODE = MODE 3, and the earpiece or the speaker is turned on, the ultrasonic proximity detection function is enabled.

**Table 3**

| Status of an infrared light proximity sensor | DSP_MODE | Device | Status of an ultrasonic wave | Typical scenario |
|---|---|---|---|---|
| On | MODE 0 | Earpiece on | Disabled | Common audio scenario, music, a video, a game, and the like |
| | | Speaker on | Disabled | |
| | | Others | Disabled | |
| | MODE 1 | Earpiece on | Disabled | Incoming call ringing |
| | | Others | Disabled | |
| | MODE 2 | Earpiece on | Enabled | In a phone call state or initiating a phone call |
| | | Others | Disabled | |
| | MODE 3 | Earpiece on | Enabled | Voice call or video chat by using instant messaging software (for example, WeChat, QQ, network calling (VOIP), Skype, or Face time) |
| | | Speaker on | Enabled | |
| | | Others | Disabled | |
| | Others | Earpiece on | Disabled | Others |
| | | Others | Disabled | |
| Off | N/A | N/A | Disabled | |

In some embodiments, enabling and disabling of the ultrasonic proximity detection function may be specifically implemented in an audio codec chip (for example, Hi6405). After receiving an ultrasonic wave enabling instruction, the audio codec chip superimposes an ultrasonic signal on an original audio channel, and sends the ultrasonic signal by using the earpiece 172. After an ultrasonic wave is reflected by the external object, the secondary microphone of the microphone 173 performs reception. The audio codec chip performs separation and processing on an ultrasonic wave received by the secondary microphone. If an ultrasonic signal that is within the defined frequency band range (for example, 24 k to 36 k, and 38 k) is intercepted, it indicates successful reception, and the audio codec chip performs determining on the received ultrasonic wave, and then reports an ultrasonic proximity detection result (approaching or leaving). If an ultrasonic signal that is within the defined frequency band range is not intercepted, it indicates unsuccessful reception, and no processing is performed.

In addition, it may be understood that in another embodiment of this application, enabling and disabling of the ultrasonic proximity detection function of the mobile phone 10 may be alternatively controlled in another manner, and a control manner is not limited to DSP_MODE, provided that the ultrasonic proximity detection function is enabled only in a specific application scenario. This is not limited herein. Besides, in addition to the earpiece, the mobile phone 10 or the another electronic device may alternatively use another component to generate an ultrasonic wave and perform ultrasonic proximity detection, for example, the ultrasonic sensor. This is not limited herein.

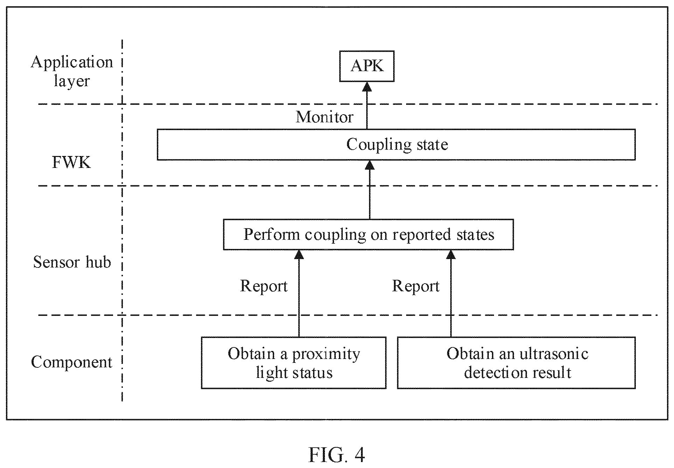

In addition, as shown in FIG. 4, when both ultrasonic proximity detection and infrared light proximity detection are used, for example, when the user of the mobile phone 10 is answering or making a call, the earpiece is turned on, but another component such as the speaker is turned off, in this case, a sensor hub (sensor hub) performs coupling analysis on an infrared light proximity detection result reported by the infrared light proximity sensor and an ultrasonic proximity detection result reported by the audio module 170 after receiving the proximity detection enabling instruction. As shown in Table 1, it is determined that the external object 20 is in the approaching state relative to the mobile phone 10, provided that one of pieces of information reported by the two indicates that the external object 20 is in the approaching state relative to the mobile phone 10; and it is determined that the external object is in the leaving state relative to the mobile phone, only when both pieces of information reported by the two indicate that the external object is in the leaving state relative to the mobile phone. Then, the sensor hub transmits a post-coupling state to the FWK, so that when the post-coupling state is the approaching state, an application at an application layer turns off the display of the mobile phone 10, to enable the function keys on the display to be in the locked state, to prevent accidental triggering of the function keys on the display; or when the post-coupling state is the leaving state, an application at an application layer turns on the display of the mobile phone 10, to enable the function keys on the display to be in an available state.

It may be understood that in another embodiment of this application, coupling analysis of the infrared light proximity detection result reported by the infrared light proximity sensor and the ultrasonic proximity detection result reported by the audio module 170 may be alternatively performed in another device or at another layer, and a coupling analysis position is not limited to the sensor hub.

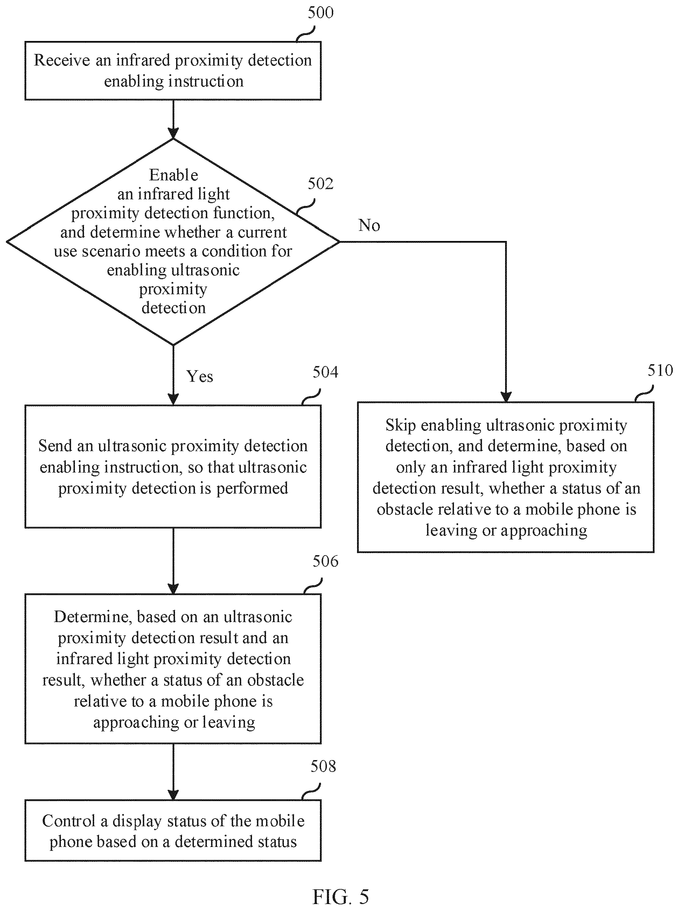

According to some embodiments of this application, with reference to the foregoing description of the mobile phone 10, FIG. 5 is a schematic flowchart of detecting, with reference to infrared light proximity detection and ultrasonic proximity detection, whether an external object approaches a mobile phone according to this application. Specific details in the foregoing description are also applicable to the process, and are not described herein again to avoid repetition. Specifically, as shown in FIG. 5, the process includes the following steps.
(1) A sensor driver and an audio driver that are of the mobile phone 10 separately receive a proximity detection enabling instruction (500). That is, when the mobile phone is in some use scenarios, whether an external object approaches or leaves needs to be detected. One or more applications in the mobile phone need to use proximity data in some scenarios (a proximity detection trigger condition), and perform a corresponding action based on the proximity data. For example, when a user is in a call, initiates a call, or answers an incoming call, a call application needs to control screen-on or screen-off of the mobile phone with reference to the proximity data. Therefore, when the user of the mobile phone is in a call, initiates a call, or answers an incoming call (that is, the proximity detection trigger condition), the call application registers for proximity detection. In other words, in response to the proximity detection trigger condition, the mobile phone 10 starts to perform proximity detection. In this case, for example, in the mobile phone 10, an application layer sends a proximity detection enabling instruction to the sensor driver at a driver layer of the mobile phone 10, to instruct to enable a corresponding detection function. It may be understood that although ultrasonic proximity detection is triggered based on an original detection enabling instruction that is used for triggering an infrared light proximity sensor in the foregoing description of the mobile phone 10, in another embodiment of this application, ultrasonic proximity detection may be alternatively triggered by using another instruction. For example, a detection instruction is sent to a driver of the infrared light proximity sensor and a driver of an ultrasonic proximity sensor separately. Therefore, this is not limited herein. It should be noted that a sequence in which the sensor driver and the audio driver receive the detection enabling instructions is not limited in this embodiment of this application.
(2) The sensor driver of the mobile phone 10 enables an infrared light proximity detection function of the infrared light proximity sensor, and the audio driver of the mobile phone 10 determines whether a current use scenario of the mobile phone meets a condition for enabling ultrasonic proximity detection (502).

For example, after receiving an infrared light proximity detection enabling instruction, the infrared light proximity sensor may periodically send out infrared light by using a light-emitting diode in the infrared light proximity sensor, receive, by using a light sensitive diode, infrared light returned by an external object, and determine, based on the returned infrared light, whether the external object approaches or leaves.

In addition, for the mobile phone 10, for the condition for enabling ultrasonic proximity detection, refer to descriptions of Table 2 and Table 3. It may be understood that use scenarios may be classified based on a specific case, and a classification manner is not limited to a classification manner mentioned in this application.

In addition, it may be understood that for an operation that the infrared light proximity sensor enables infrared light proximity detection and an operation that the audio driver determines whether the condition for enabling ultrasonic proximity detection is met, either of the two operations may be performed first, or the two operations may be performed simultaneously. This is not limited herein.

(3) If the audio driver determines that the current use scenario does not meet the condition for enabling ultrasonic proximity detection, ultrasonic proximity detection is not enabled, and whether a status of the external object relative to the mobile phone 10 is leaving or approaching is determined based on only an infrared light proximity detection result (510).

(4) If determining that the condition for enabling ultrasonic proximity detection is met, the audio driver sends an ultrasonic proximity detection enabling instruction to the audio module 170, so that the audio module 170 performs ultrasonic proximity detection. Specifically, the earpiece 172 in the audio module 170 emits an ultrasonic wave, and the secondary microphone receives an ultrasonic wave returned by the external object (504).

For example, for the mobile phone 10, the ultrasonic proximity detection enabling instruction is sent to the audio module 170. After receiving the ultrasonic wave enabling instruction, the audio codec chip superimposes an ultrasonic signal on an original audio channel, and sends the ultrasonic signal by using the earpiece 172. After an ultrasonic wave is reflected by the external object, the secondary microphone located at the bottom of the mobile phone 10 performs reception. The codec chip performs separation and processing on an ultrasonic wave received by the secondary microphone. If an ultrasonic signal that is within a defined frequency band range (for example, 24 k to 36 k, and 38 k) is intercepted, it indicates successful reception, and whether the external object approaches or leaves the mobile phone 10 is determined based on the received ultrasonic wave.

(5) After receiving an ultrasonic proximity detection result and the infrared light proximity detection result, the sensor hub of the mobile phone 10 determines, based on the ultrasonic proximity detection result and the infrared light proximity detection result, whether the status of the external object relative to the mobile phone 10 is approaching or leaving (506).

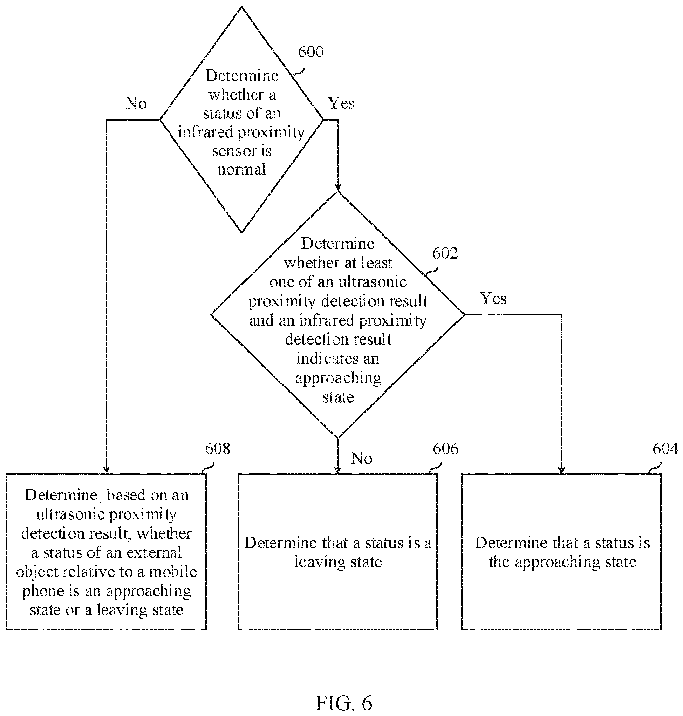

In some embodiments, a process in which the sensor hub determines, based on the ultrasonic proximity detection result and the infrared light proximity detection result, whether the status of the external object relative to the mobile phone 10 is the approaching state or the leaving state is shown in FIG. 6, and specifically includes the following steps.
(a) The sensor hub determines whether a status of the infrared light proximity sensor is normal (600). Whether the status of the infrared light proximity sensor is normal may be determined by using various technical means. For example, it is determined whether data received from the infrared light proximity sensor is valid data. If a type of the received data is different from a type of data indicating the infrared light proximity detection result, it indicates that the data sent by the infrared light proximity sensor is not valid data. For another example, if only an infrared light proximity detection result indicating the approaching state is received from the infrared light proximity sensor within predetermined duration, but an infrared light proximity detection result indicating the leaving state is not received, or if only an infrared light proximity detection result indicating the leaving state is received from the infrared light proximity sensor within predetermined duration, but an infrared light proximity detection result indicating the approaching state is not received, it indicates that the status of the infrared light proximity sensor is abnormal.
(b) If a determining result of the sensor hub is that the status of the infrared light proximity sensor is normal, it is determined whether at least one of the ultrasonic proximity detection result and the infrared light proximity detection result indicates the approaching state (602). If a determining result is that at least one indicates the approaching state, it is determined that the external object is in the approaching state relative to the mobile phone (604); or if a determining result is that both the ultrasonic proximity detection result and the infrared light proximity detection result indicate the leaving state, it is determined that the external object is in the leaving state relative to the mobile phone (606).

In some embodiments, for judgment logic of determining a display status based on the ultrasonic proximity detection result and the infrared light proximity detection result, refer to the foregoing description about Table 1.

(c) If a determining result is that the status of the infrared light proximity sensor is abnormal, whether the status of the external object relative to the mobile phone 10 is the approaching state or the leaving state is determined based on only the ultrasonic proximity detection result (608). To be specific, if the ultrasonic proximity detection result indicates the approaching state, it is determined that the status of the external object relative to the mobile phone 10 is the approaching state; or if the ultrasonic proximity detection result indicates the leaving state, it is determined that the status of the external object relative to the mobile phone 10 is the leaving state.

(6) The FWK of the mobile phone 10 receives a determined status of the external object relative to the mobile phone 10 from the sensor hub, and an application at the application layer of the mobile phone 10 may control the display status of the mobile phone based on the status received by the FWK (508). For example, when the status received by the FWK is the approaching state, the application controls the display of the mobile phone to enter or remain in a state corresponding to the approaching state; or when the status received by the FWK is the leaving state, the application controls the display to enter or remain in a state corresponding to the leaving state.

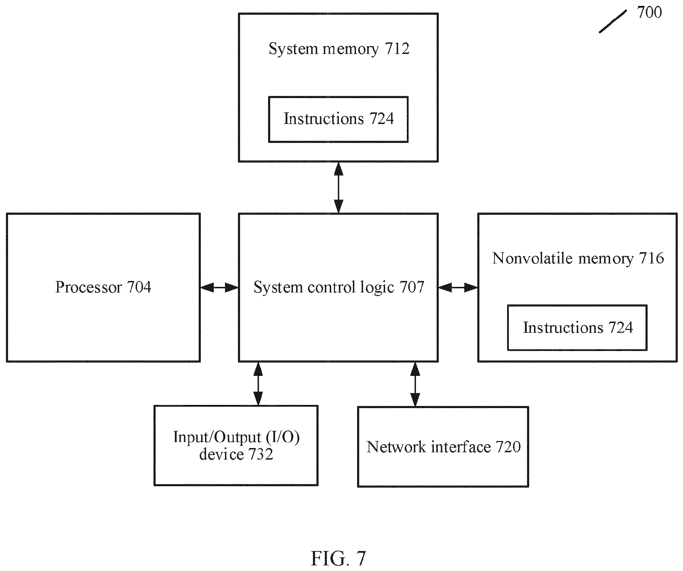

FIG. 7 is a block diagram of a terminal 700 according to an embodiment of this application. FIG. 7 schematically shows an example of a terminal 700 according to a plurality of embodiments. In an embodiment, the terminal 700 may include one or more processors 704. system control logic 708 connected to at least one of the processors 704, a system memory 712 connected to the system control logic 708, a nonvolatile memory (NVM) 716 connected to the system control logic 708, and a network interface 720 connected to the system control logic 708.

In some embodiments, the processor 704 may include one or more single-core or multi-core processors. In some embodiments, the processor 704 may include any combination of a general-purpose processor and a dedicated processor (for example, a graphics processing unit, an application processor, or a baseband processor). In an embodiment in which the terminal 700 uses an eNB (Evolved Node B, enhanced NodeB) 101 or a RAN (Radio Access Network, radio access network) controller 102, the processor 704 may be configured to perform various conforming embodiments, for example, one or more of the plurality of embodiments shown in FIG. 1 to FIG. 6.

In some embodiments, the system control logic 708 may include any suitable interface controller, to provide any suitable interface for at least one of the processors 704 and/or any suitable device or component that communicates with the system control logic 708.

In some embodiments, the system control logic 708 may include one or more memory controllers, to provide an interface that connects to the system memory 712. The system memory 712 may be configured to load and store data and/or instructions. In some embodiments, the memory 712 of the terminal 700 may include any suitable volatile memory, for example, a suitable dynamic random access memory (DRAM).

The NVM/memory 716 may include one or more tangible, non-transitory computer-readable media that are configured to store data and/or instructions. In some embodiments, the NVM/memory 716 may include any suitable nonvolatile memory such as a flash memory, and/or any suitable nonvolatile storage device, for example, at least one of an HDD (Hard Disk Drive, hard disk drive), a CD (Compact Disc, compact disc) drive, and a DVD (Digital Versatile Disc, digital versatile disc) drive.

The NVM/memory 716 may include a part of storage resources of an apparatus on which the terminal 700 is installed, or may be accessed by a device, but is not necessarily a part of the device. For example, the NVM/memory 716 may be accessed over a network through the network interface 720.

In particular, the system memory 712 and the NVM/memory 716 may include a temporary copy of instructions 724 and a permanent copy of the instructions 724, respectively. The instructions 724 may include instructions that are executed by at least one of the processors 704 to enable the terminal 700 to implement the methods shown in FIG. 5 and FIG. 6. In some embodiments, the instructions 724, hardware, firmware, and/or software components thereof may be additionally/alternatively placed in the system control logic 708, the network interface 720, and/or the processor 804.

The network interface 720 may include a transceiver, and is configured to provide a radio interface for the terminal 700, further to communicate with any other suitable device (for example, a front-end module or an antenna) through one or more networks. In some embodiments, the network interface 720 may be integrated in another component in the terminal 700. For example, the network interface 720 may be integrated in at least one of the processor 704, the system memory 712, the NVM/memory 716, and a firmware device (not shown) that includes instructions. When at least one of the processors 704 executes the instructions, the terminal 700 implements the methods shown in FIG. 5 and FIG. 6.

The network interface 720 may further include any suitable hardware and/or firmware, to provide a multiple-input multiple-output radio interface. For example, the network interface 720 may be a network adapter, a wireless network adapter, a phone modem, and/or a wireless modem.

In an embodiment, at least one of the processors 704 may be packaged with logic of one or more controllers used for the system control logic 708, to form a system in a package (SiP). In an embodiment, at least one of the processors 704 may be integrated on a same die with logic of one or more controllers used for the system control logic 708, to form a system on a chip (SoC).

The terminal 700 may further include an input/output (I/O) device 732. The I/O device 732 may include a user interface, so that a user can interact with the terminal 700. Design of a peripheral component interface enables a peripheral component to also interact with the terminal 700. In some embodiments, the terminal 700 further includes a sensor, which is configured to determine at least one of an environmental condition and position information that are related to the terminal 700. The sensor of the terminal 700 may include an infrared light proximity sensor, which is configured to detect, by emitting and receiving infrared light, whether an external object approaches or leaves the terminal. The sensor of the terminal 700 may further include at least one ultrasonic proximity sensor, which is configured to detect a distance between an external object and an electronic device by emitting and receiving ultrasonic waves, and further determine whether the external object approaches or leaves the terminal.

In some embodiments, the user interface may include but is not limited to a display (for example, a liquid crystal display or a touchscreen display), an earpiece, a speaker, a microphone, one or more cameras (for example, a still-picture camera and/or a camera), a flashlight (for example, a light-emitting diode flash), and a keyboard. The earpiece can emit an ultrasonic wave. The microphone is configured to convert a collected sound signal into an electrical signal. In some embodiments, after an ultrasonic wave emitted by the earpiece is reflected by an external object, a secondary microphone can collect a reflected ultrasonic wave, to determine a distance between the external object and the terminal.

In some embodiments, the peripheral component interface may include but is not limited to a nonvolatile memory port, an audio jack, and a power interface.

In some embodiments, the sensor may include but is not limited to a gyroscope sensor, an accelerometer, a proximity sensor, an ambient light sensor, and a positioning unit. The positioning unit may alternatively be a part of the network interface 720, or interact with the network interface 720, to communicate with a component (for example, a global positioning system (GPS) satellite) of a positioning network.

Embodiments of a mechanism disclosed in this application may be implemented in hardware, software, firmware, or a combination of these implementation methods. The embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions, to perform functions described in this application and generate output information. The output information may be applied to one or more output devices in a known manner. For a purpose of this application, a processing system includes any system with a processor such as a digital signal processor (DSP), a microcontroller, an application-specific integrated circuit (ASIC), or a microprocessor.

The program code can be implemented in a high-level programming language or an object-oriented programming language, to communicate with the processing system. When needed, the program code may be alternatively implemented in assembly language or machine language. Actually, the mechanism described in this application is not limited to a scope of any particular programming language. In any one case, the language may be a complied language or an interpreted language.

In some cases, the disclosed embodiments may be implemented by hardware, firmware, software, or any combination thereof. The disclosed embodiments may be alternatively implemented as instructions carried by or stored on one or more transitory or non-transitory machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, a computer) readable form, including but not limited to: a floppy disk, a compact disc, an optical disc, a read-only memory (CD-ROMs), a magneto-optical disk, a read-only memory (ROM), a random access memory (RAM), an erasable programmable read only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine (for example, a computer) readable form.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not most important, and a combination of functions implemented by these logical units/modules is a key to resolving the technical problem proposed in this application. In addition, to highlight an innovative part of this application, a unit/module that is not closely related to resolving the technical problem proposed in this application is not introduced in the foregoing device embodiments of this application. This does not indicate that there is not another unit/module in the foregoing device embodiments.

It should be noted that, in the examples and specification of this patent, relational terms such as first and second are only used to distinguish one entity or operation from another entity or operation, and do not necessarily require or imply that any actual relationship or sequence exists between these entities or operations. In addition, the terms "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

Although this application has been illustrated and described with reference to some embodiments of this application, a person of ordinary skill in the art should understand that various changes may be made to this application in form and detail without departing from the scope of this application.

## Claims

1. A display control method applied to an electronic device, wherein the electronic device has an infrared light proximity detection function and an ultrasonic proximity detection function, and the method comprises:
in response to a proximity detection trigger condition, performing (502), by the electronic device, infrared light proximity detection by using an infrared light proximity sensor, and determining (502) whether a current use status of the electronic device meets a condition for enabling ultrasonic proximity detection; and
when the current use status meets the condition for enabling ultrasonic proximity detection, enabling (504), by the electronic device, ultrasonic proximity detection, to detect whether an external object approaches or leaves the electronic device.

2. The method according to claim 1, further comprising:
detecting (600), by the electronic device, whether a status of the infrared light proximity sensor is normal; and
when the status of the infrared light proximity sensor is normal, determining (602), by the electronic device based on an infrared light proximity detection result and an ultrasonic proximity detection result, whether an external object approaches or leaves; or
when the status of the infrared light proximity sensor is abnormal, determining (608), by the electronic device based on an ultrasonic proximity detection result, whether an external object approaches or leaves.

3. The method according to claim 2, wherein the determining (602), based on an infrared light proximity detection result and an ultrasonic proximity detection result, whether an external object approaches or leaves comprises:
when at least one of the infrared light proximity detection result and the ultrasonic proximity detection result indicates that an external object approaches the electronic device, determining, by the electronic device, that the external object approaches; and
when both the infrared light proximity detection result and the ultrasonic proximity detection result indicate that an external object leaves the electronic device, determining, by the electronic device, that the external object leaves.

4. The method according to any one of claims 1 to 3, wherein the condition for enabling ultrasonic proximity detection comprises:
the electronic device is in a phone call state or the electronic device initiates a phone call.

5. The method according to any one of claims 1 to 3, wherein the condition for enabling ultrasonic proximity detection comprises:
the electronic device is in a phone call state and an earpiece of the electronic device is turned on; or
the electronic device initiates a phone call and an earpiece of the electronic device is turned on.

6. The method according to any one of claims 1 to 3, wherein the condition for enabling ultrasonic proximity detection comprises:
the electronic device is in an instant-messaging-software call state, or the electronic device initiates an instant-messaging-software call.

7. The method according to any one of claims 1 to 3, wherein the condition for enabling ultrasonic proximity detection comprises:
the electronic device is in an instant-messaging-software call state, and an earpiece or a speaker of the electronic device is turned on.

8. The method according to any one of claims 1 to 3, wherein the condition for enabling ultrasonic proximity detection comprises:
the electronic device initiates an instant-messaging-software call, and an earpiece or a speaker of the electronic device is turned on.

9. The method according to any one of claims 1 to 3, wherein the condition for enabling ultrasonic proximity detection comprises:
a current digital signal processor mode of the electronic device is a digital signal processor mode that meets the condition for enabling ultrasonic proximity detection.

10. The method according to any one of claims 1 to 3, wherein the condition for enabling ultrasonic proximity detection comprises:
a current digital signal processor mode of the electronic device is a first digital signal processor mode that meets the condition for enabling ultrasonic proximity detection; and
an earpiece of the electronic device is turned on.

11. The method according to any one of claims 1 to 3, wherein the condition for enabling ultrasonic proximity detection comprises:
a current digital signal processor mode of the electronic device is a second digital signal processor mode that meets the condition for enabling ultrasonic proximity detection; and
an earpiece or a speaker of the electronic device is turned on.

12. A machine-readable medium (716), wherein the machine-readable medium (716) stores instructions (724), and when the instructions (724) are executed on a machine, the machine is enabled to perform the method according to any one of claims 1 to 11.

13. A terminal (700), comprising:
one or more processors (704);
a memory (716), configured to store instructions (724);
an infrared light proximity sensor, configured to detect approaching and leaving of an external object by using infrared light; and
an ultrasonic proximity sensor, configured to detect approaching and leaving of an external object by using an ultrasonic wave, wherein
when the instructions (724) are executed by the one or more processors (704), the terminal (700) is enabled to control the infrared light proximity sensor and the ultrasonic proximity sensor to perform the method according to any one of claims 1 to 11.

14. The terminal (700) according to claim 13, wherein the ultrasonic proximity sensor comprises an earpiece and a microphone that are of the terminal (700), the earpiece emits an ultrasonic wave, and the microphone receives an ultrasonic wave reflected by the external object.

## Patentansprüche

1. Anzeigesteuerungsverfahren, angewendet auf eine elektronische Vorrichtung, wobei die elektronische Vorrichtung eine Infrarotlicht-Annäherungsdetektionsfunktion und eine Ultraschall-Annäherungsdetektionsfunktion aufweist und wobei das Verfahren Folgendes umfasst:
in Reaktion auf eine Annäherungsdetektionsauslösebedingung, Durchführen (502), durch die elektronische Vorrichtung, einer Infrarotlicht-Annäherungsdetektion unter Verwendung eines Infrarotlicht-Annäherungssensors und Bestimmen (502), ob ein aktueller Nutzungsstatus der elektronischen Vorrichtung eine Bedingung zur Aktivierung von Ultraschall-Annäherungsdetektion erfüllt, und
wenn der aktuelle Nutzungsstatus die Bedingung zur Aktivierung von Ultraschall-Annäherungsdetektion erfüllt, Aktivieren (504), durch die elektronische Vorrichtung, von Ultraschall-Annäherungsdetektion, um zu detektieren, ob sich ein externes Objekt der elektronischen Vorrichtung nähert oder sich von dieser entfernt.

2. Verfahren nach Anspruch 1, das ferner Folgendes umfasst:
Detektieren (600), durch die elektronische Vorrichtung, ob ein Status des Infrarotlicht-Annäherungssensors normal ist; und
wenn der Status des Infrarotlicht-Annäherungssensors normal ist, Bestimmen (602), durch die elektronische Vorrichtung basierend auf dem Ergebnis der Infrarotlicht-Annäherungsdetektion und einem Ergebnis der Ultraschall-Annäherungsdetektion, ob sich ein externes Objekt nähert oder entfernt; oder
wenn der Status des Infrarotlicht-Annäherungssensors unnormal ist, Bestimmen (608), durch die elektronische Vorrichtung basierend auf einem Ergebnis der Ultraschall-Annäherungsdetektion, ob sich ein externes Objekt nähert oder entfernt.

3. Verfahren nach Anspruch 2, wobei das Bestimmen (602), basierend auf einem Ergebnis der Infrarotlicht-Annäherungsdetektion und einem Ergebnis der Ultraschall-Annäherungsdetektion, ob sich ein externes Objekt nähert oder entfernt, Folgendes umfasst:
wenn zumindest eines aus dem Ergebnis der Infrarotlicht-Annäherungsdetektion und dem Ergebnis der Ultraschall-Annäherungsdetektion anzeigt, dass sich ein externes Objekt der elektronischen Vorrichtung nähert, Bestimmen, durch die elektronische Vorrichtung, dass sich das externe Objekt nähert; und
wenn sowohl das Ergebnis der Infrarotlicht-Annäherungsdetektion als auch das Ergebnis der Ultraschall-Annäherungsdetektion anzeigen, dass sich ein externes Objekt von der elektronischen Vorrichtung entfernt, Bestimmen, durch die elektronische Vorrichtung, dass sich das externe Objekt entfernt.

4. Verfahren nach einem der Ansprüche 1 bis 3, wobei die Bedingung zum Aktivieren der Ultraschall-Annäherungsdetektion Folgendes umfasst:
die elektronische Vorrichtung befindet sich in einem Telefonanrufzustand, oder die elektronische Vorrichtung initiiert einen Telefonanruf.

5. Verfahren nach einem der Ansprüche 1 bis 3, wobei die Bedingung zum Aktivieren der Ultraschall-Annäherungsdetektion Folgendes umfasst:
die elektronische Vorrichtung befindet sich in einem Telefonanrufzustand, und ein Ohrhörer der elektronischen Vorrichtung ist eingeschaltet; oder
die elektronische Vorrichtung initiiert einen Telefonanruf, und ein Ohrhörer der elektronischen Vorrichtung ist eingeschaltet.

6. Verfahren nach einem der Ansprüche 1 bis 3, wobei die Bedingung zum Aktivieren der Ultraschall-Annäherungsdetektion Folgendes umfasst:
die elektronische Vorrichtung befindet sich in einem Instant-Messaging-Softwareaufrufzustand, oder die elektronische Vorrichtung initiiert einen Instant-Messaging-Softwareaufruf.

7. Verfahren nach einem der Ansprüche 1 bis 3, wobei die Bedingung zum Aktivieren der Ultraschall-Annäherungsdetektion Folgendes umfasst:
die elektronische Vorrichtung befindet sich in einem Instant-Messaging-Softwareaufrufzustand, und ein Ohrhörer oder ein Lautsprecher der elektronischen Vorrichtung ist eingeschaltet.

8. Verfahren nach einem der Ansprüche 1 bis 3, wobei die Bedingung zum Aktivieren der Ultraschall-Annäherungsdetektion Folgendes umfasst:
die elektronische Vorrichtung initiiert einen Instant-Messaging-Softwareaufruf, und ein Ohrhörer oder ein Lautsprecher der elektronischen Vorrichtung ist eingeschaltet.

9. Verfahren nach einem der Ansprüche 1 bis 3, wobei die Bedingung zum Aktivieren der Ultraschall-Annäherungsdetektion Folgendes umfasst:
ein aktueller Digitalsignalprozessormodus der elektronischen Vorrichtung ist ein Digitalsignalprozessormodus, der die Bedingung zum Aktivieren von Ultraschall-Annäherungsdetektion erfüllt.

10. Verfahren nach einem der Ansprüche 1 bis 3, wobei die Bedingung zum Aktivieren der Ultraschall-Annäherungsdetektion Folgendes umfasst:
ein aktueller Digitalsignalprozessormodus der elektronischen Vorrichtung ist ein erster Digitalsignalprozessormodus, der die Bedingung zum Aktivieren von Ultraschall-Annäherungsdetektion erfüllt; und
ein Ohrhörer der elektronischen Vorrichtung ist eingeschaltet.

11. Verfahren nach einem der Ansprüche 1 bis 3, wobei die Bedingung zum Aktivieren der Ultraschall-Annäherungsdetektion Folgendes umfasst:
ein aktueller Digitalsignalprozessormodus der elektronischen Vorrichtung ist ein zweiter Digitalsignalprozessormodus, der die Bedingung zum Aktivieren von Ultraschall-Annäherungsdetektion erfüllt; und
ein Ohrhörer oder ein Lautsprecher der elektronischen Vorrichtung ist eingeschaltet.

12. Maschinenlesbares Medium (716), wobei das maschinenlesbare Medium (716) Anweisungen (724) speichert, und wobei, wenn die Anweisungen (724) auf einer Maschine ausgeführt werden, der Maschine ermöglicht wird, das Verfahren nach einem der Ansprüche 1 bis 11 durchzuführen.

13. Endgerät (700), das Folgendes umfasst:
einen oder mehrere Prozessoren (704);
einen Speicher (716), ausgelegt zum Speichern von Anweisungen (724);
einen Infrarotlicht-Annäherungssensor, ausgelegt zum Detektieren des Annäherns und Entfernens eines externen Objekts unter Verwendung von Infrarotlicht; und
einen Ultraschall-Annäherungssensor, ausgelegt zum Detektieren des Annäherns und Entfernens eines externen Objekts unter Verwendung einer Ultraschallwelle, wobei wenn die Anweisungen (724) durch den einen oder die mehreren Prozessoren (704) ausgeführt werden, dem Endgerät (700) ermöglicht wird, den Infrarotlicht-Annäherungssensor und den Ultraschall-Annäherungssensor zu steuern, um das Verfahren nach einem der Ansprüche 1 bis 11 durchzuführen.

14. Endgerät (700) nach Anspruch 13, wobei der Ultraschall-Annäherungssensor einen Ohrhörer und ein Mikrofon umfasst, die vom Endgerät (700) sind, wobei der Ohrhörer eine Ultraschallwelle emittiert und das Mikrofon eine durch das externe Objekt reflektierte Ultraschallwelle empfängt.

## Revendications

1. Procédé de commande d'affichage appliqué à un dispositif électronique, le dispositif électronique ayant une fonction de détection de proximité de lumière infrarouge et une fonction de détection de proximité ultrasonore, et le procédé comprenant :
en réponse à une condition de déclenchement de détection de proximité, la réalisation (502), par le dispositif électronique, d'une détection de proximité de lumière infrarouge en utilisant un capteur de proximité de lumière infrarouge, et la détermination (502) du fait qu'un statut d'utilisation actuel du dispositif électronique satisfait ou non une condition pour activer une détection de proximité ultrasonore ; et
lorsque le statut d'utilisation actuel satisfait la condition pour activer une détection de proximité ultrasonore, l'activation (504), par le dispositif électronique, d'une détection de proximité ultrasonore, pour détecter si un objet externe approche ou part du dispositif électronique.

2. Procédé selon la revendication 1, comprenant en outre :
la détection (600), par le dispositif électronique, du fait qu'un statut du capteur de proximité de lumière infrarouge est normal ; et
lorsque le statut du capteur de proximité de lumière infrarouge est normal, la détermination (602), par le dispositif électronique sur la base d'un résultat de détection de proximité de lumière infrarouge et d'un résultat de détection de proximité ultrasonore, du fait qu'un objet externe approche ou part ; ou
lorsque le statut du capteur de proximité de lumière infrarouge est anormal, la détermination (608), par le dispositif électronique sur la base d'un résultat de détection de proximité ultrasonore, du fait qu'un objet externe approche ou part.

3. Procédé selon la revendication 2, dans lequel la détermination (602), sur la base d'un résultat de détection de proximité de lumière infrarouge et d'un résultat de détection de proximité ultrasonore, du fait qu'un objet externe approche ou part comprend :
lorsqu'au moins un résultat parmi le résultat de détection de proximité de lumière infrarouge et le résultat de détection de proximité ultrasonore indique qu'un objet externe approche du dispositif électronique, la détermination, par le dispositif électronique, que l'objet externe approche ; et
lorsque le résultat de détection de proximité de lumière infrarouge et le résultat de détection de proximité ultrasonore indiquent qu'un objet externe part du dispositif électronique, la détermination, par le dispositif électronique, que l'objet externe part.

4. Procédé selon l'une quelconque des revendications 1 à 3, dans lequel la condition pour activer une détection de proximité ultrasonore est la suivante :
le dispositif électronique est dans un état d'appel téléphonique ou le dispositif électronique lance un appel téléphonique.

5. Procédé selon l'une quelconque des revendications 1 à 3, dans lequel la condition pour activer une détection de proximité ultrasonore est la suivante :
le dispositif électronique est dans un état d'appel téléphonique et un écouteur du dispositif électronique est allumé ; ou
le dispositif électronique lance un appel téléphonique et un écouteur du dispositif électronique est allumé.

6. Procédé selon l'une quelconque des revendications 1 à 3, dans lequel la condition pour activer une détection de proximité ultrasonore est la suivante :
le dispositif électronique est dans un état d'appel de logiciel de messagerie instantanée ou le dispositif électronique lance un appel de logiciel de messagerie instantanée.

7. Procédé selon l'une quelconque des revendications 1 à 3, dans lequel la condition pour activer une détection de proximité ultrasonore est la suivante :
le dispositif électronique est dans un état d'appel de logiciel de messagerie instantanée et un écouteur ou un haut-parleur du dispositif électronique est allumé.

8. Procédé selon l'une quelconque des revendications 1 à 3, dans lequel la condition pour activer une détection de proximité ultrasonore est la suivante :
le dispositif électronique lance un appel de logiciel de messagerie instantanée et un écouteur ou un haut-parleur du dispositif électronique est allumé.

9. Procédé selon l'une quelconque des revendications 1 à 3, dans lequel la condition pour activer une détection de proximité ultrasonore est la suivante :
un mode de processeur de signal numérique actuel du dispositif électronique est un mode de processeur de signal numérique qui satisfait la condition pour activer une détection de proximité ultrasonore.

10. Procédé selon l'une quelconque des revendications 1 à 3, dans lequel la condition pour activer une détection de proximité ultrasonore est la suivante :
un mode de processeur de signal numérique actuel du dispositif électronique est un premier mode de processeur de signal numérique qui satisfait la condition pour activer une détection de proximité ultrasonore ; et
un écouteur du dispositif électronique est allumé.

11. Procédé selon l'une quelconque des revendications 1 à 3, dans lequel la condition pour activer une détection de proximité ultrasonore est la suivante :
un mode de processeur de signal numérique actuel du dispositif électronique est un deuxième mode de processeur de signal numérique qui satisfait la condition pour activer une détection de proximité ultrasonore ; et
un écouteur ou un haut-parleur du dispositif électronique est allumé.

12. Support lisible par machine (716), le support lisible par machine (716) stockant des instructions (724), et lorsque les instructions (724) sont exécutées sur une machine, la machine est activée pour réaliser le procédé selon l'une quelconque des revendications 1 à 11.

13. Terminal (700), comprenant :
un ou plusieurs processeurs (704) ;
une mémoire (716), configurée pour stocker des instructions (724) ;
un capteur de proximité de lumière infrarouge, configuré pour détecter l'approche et le départ d'un objet externe en utilisant une lumière infrarouge ; et
un capteur de proximité ultrasonore, configuré pour détecter l'approche et le départ d'un objet externe en utilisant une onde ultrasonore, dans lequel
lorsque les instructions (724) sont exécutées par les un ou plusieurs processeurs (704), le terminal (700) est activé pour commander le capteur de proximité de lumière infrarouge et le capteur de proximité ultrasonore afin qu'ils réalisent le procédé selon l'une quelconque des revendications 1 à 11.

14. Terminal (700) selon la revendication 13, dans lequel le capteur de proximité ultrasonore comprend un écouteur et un microphone qui sont ceux du terminal (700), l'écouteur émet une onde ultrasonore, et le microphone reçoit une onde ultrasonore réfléchie par l'objet externe.
